Europäisches Patentamt

European Patent Office

Office européen des brevets

(11) Publication number: **0 487 058 A2**

# EUROPEAN PATENT APPLICATION

(21) Application number: **91119777.0**

(22) Date of filing: **19.11.91**

(51) Int. Cl.⁵: **C09J 4/06**, C08F 279/02, C08F 255/02

(30) Priority: **21.11.90 IT 2214190**

(43) Date of publication of application:
**27.05.92 Bulletin 92/22**

(84) Designated Contracting States:
**BE CH DE ES FR GB LI NL SE**

(71) Applicant: **MINISTERO DELL' UNIVERSITA' E DELLA RICERCA SCIENTIFICA E TECNOLOGICA**
**76, Lungotevere Thaon di Revel**
**I-00196 Roma(IT)**

(72) Inventor: **Di Ruocco, Vittorio**
**21, Corso Milano**
**I-28100 Novara(IT)**
Inventor: **Braglia, Roberto**
**1, Via Meucci**
**I-43100 Parma(IT)**
Inventor: **Garbassi, Fabio**
**6, Via Constantino Porta**
**I-28100 Novara(IT)**

(74) Representative: **Weinhold, Peter, Dr. et al**
**Patentanwälte Dipl.-Ing. G. Dannenberg Dr. P. Weinhold Dr. D. Gudel Dipl.-Ing. S. Schubert Dr. P. Barz Siegfriedstrasse 8 W-8000 München 40(DE)**

(54) **High impact resistance adhesive compositions.**

(57) Disclosed are acrylic adhesive compositions comprising:
(a) one or more polymerizable acrylic monomers;
(b) a free radical generator optionally combined with an activator, and
(c) a synergic rubber mix of
    (i) diene-nitrile rubber and
    (ii) chlorosulphonated polyethylene.

EP 0 487 058 A2

The present invention relates to adhesive compositions of the acrylic type. More in particular, the present invention relates to adhesive compositions of the acrylic type which are modified with rubber.

The use of structural adhesives has substantially increased within the last years mainly in the aerospace and automotive sectors, resulting in the development of new high-performance adhesive systems.

The use of structural adhesives in said sectors has faciliated the replacement of the conventional metallic materials with polymeric materials. Furthermore, the generation and development of the structural acrylic adhesives has permitted the application thereof also onto not pretreated, or even to not perfectly clean surfaces, without affecting too much the adhesive performance thereof.

The structural acrylic adhesives are generally composed of a mixture of acrylic monomers which polymerize according to a radical mechanism. Their mechanical properties are comparable with those of the epoxy adhesives, with the advantage of a much shorter setting time, a higher impact resistance and the capability of providing resistant joints also with not very clean surfaces. Since the acrylic matrices are brittle after the cross-linking, the addition of a rubber to the formulation increases the toughness thereof. It is known, in fact, that the mechanical properties of brittle polymers can be improved by incorporating particles of a second rubber phase into the matrix. The presence of a second phase consisting of rubber particles improves the toughening.

It is known to use for this purpose elastomeric components in acrylic adhesive formulations in order to obtain a toughness improvement in the acrylic matrix, as well as to improve the resilience thereof. For this purpose, the use of chlorosulphonated polyethylene (US-A-4,112,013); of polyisoprene (US-A-4,451,615); and of elastomeric mixtures based on chlorosulphonated polyethylene and fluoroelastomers (US-A-4,182,644) has been described.

It is also known (US-A-4,645,810) to use, in acrylic adhesives, one or more elastomers, such as chlorosulphonated polyethylene polymers and functionalized (carboxylated) butadiene-acrylonitrile copolymers.

Nevertheless, particularly in applications in the automotive sector, the adhesive compositions belonging to the class of acrylic adhesives known so far do not always permit to obtain a good balance of characteristics such as a high impact resistance combined with good adhesive properties.

It has now been found that the above drawbacks can be overcome by using a particular adhesive composition having a high impact strength, based on acrylic monomers containing, as elastomeric component, a synergic rubber mix of chlorosulphonated polyethylene polymer(s) and butadiene-(unsaturated) nitrile copolymer(s).

Thus, the present invention provides acrylic adhesive compositions having improved resilience and toughness, which comprise:

(a) one or more polymerizable acrylic monomers;

(b) a free radical generator, optionally combined with an activator, and

(c) a synergic rubber mix of
   (i) diene-nitrile rubber and
   (ii) chlorosulphonated polyethylene.

The free radical generator (b) can be any compound having said activity and being utilizable in already known analogous adhesive compositions.

Thus, it is possible to use, e.g., organic hydroperoxides, peresters, organic peracids and oxaziridines such as, for example, cumene hydroperoxide or the oxaziridines described in EP-A-334,376, 334,377 and 334,378. The same applies to the optional activating agent (activator) for generator (b); utilizable activating agents are, e.g., the known reducing agents or polymerization activators.

Specific examples of activators are ferrous chloride, titanium dichloride, sodium or potassium acid sulphite, ascorbic acid, acetaldehyde and other aldehydes, sulphurous acid, alkali metal sulphites, disulphites, sulphoxylates, thiosulphates, hydrogen sulphide, hydroxylamine, hydrazine, acetone sodium bisulphite, formaldehyde sodium sulphoxylate, sulphinic acids, copper and iron salts, salts of other low-valence metals, laevulinic acid, reducing sugars such as glucose, beta-mercaptoethanol, dicyandiamide, iron salts of aminoacids, iron succinate, copper sulphate pentahydrate and tertiary amines.

Furthermore, it has been found that individual products or mixtures of aldehyde/amine condensation products are particularly suitable for being utilized as polymerization activators. Said mixtures of condensation products can be utilized as such or in partially purified form (in order to obtain a higher concentration of the most active products) and in both cases it is possible to add a soluble salt of a transition metal.

Various aldehydes and amines are suitable for the preparation of the aldehyde/amine condensation mixture, operating according to known methods. The aldehydes are preferably of aliphatic nature and contain radicals having from 1 to 12 carbon atoms, for example acetaldehyde, n-butyraldehyde, propional-

2

dehyde, cyclopentanal, n-hexanal, cyclohexanal, hydrocinnamic aldehyde, n-heptanal, n-decanal, n-dodecanal, etc. Any aliphatic or aromatic primary amine preferably having up to 18 carbon atoms is utilizable, for example ethylamine, n-butylamine, n-pentylamine, cyclopentylamine, n-hexylamine, cyclohexylamine, n-octylamine, n-decylamine, n-dodecylamine, n-hexadecylamine, n-octadecylamine, aniline, tolyl amine, xylyl amine, etc.

The mixture which is preferably utilized as polymerization activator consists of butyraldehyde/aniline condensation products and is available on the market under the trade mark VAMAC[(R)] 808 (Du Pont, USA).

The most active component of said mixture is N-phenyl-3,5-diethyl-2-propyl-1,2-dihydropyridine (DHP), which is present in the mixture in amounts of not more than 50% by weight.

The DHP amount contained in the activator can be raised up to 100% by fractionated distillation; fractions containing DHP amounts ranging from 70 to 100% by weight can be used to particular advantage, thereby obtaining improved performances.

Whenever used in the present invention, the symbol DHP means mixtures containing at least 70% by weight of the above dihydropyridine.

Both the aniline/butyraldehyde condensation mixture and DHP can be utilized as such or diluted with solvents, preferably chlorinated solvents, for example 1,1,1-trichloroethane, methylene chloride, etc., the amount of solvent generally ranging from 10 to 80% by weight.

Soluble salts of transition metals, preferably containing cobalt, nickel, copper, manganese, iron and/or vanadium, can be added to the aldehyde/amine condensation mixture, for example the aniline/butyraldehyde mixture, or to DHP or a solution thereof, at concentrations preferably not exceeding 5% by weight.

Specific examples of utilizable organic salts are copper saccharinate, copper para-toluene sulphinate, cobalt acetyl-acetonate, cobalt naphthenate, vanadium acetyl acetonate, iron octoate, iron naphthenate, iron lactate, iron gluconate, iron saccharinate, etc.

The useful monomers (a) are of the vinylic type and, for the objects of the present invention, they are preferably acrylic monomers and mixtures of said monomers, such as methyl methacrylate, ethyl methacrylate, butyl methacrylate, methyl acrylate, ethyl acrylate, butyl acrylate, cyclohexyl methacrylate, hexyl methacrylate, 2-ethylhexyl methacrylate, lauryl methacrylate, cyclohexyl acrylate, hexyl acrylate, 2-ethyl hexyl acrylate, lauryl acrylate, methacrylic acid, acrylic acid, ethylene glycol (di)acrylate and other glycol acrylates, diacrylates, methacrylates and dimethacrylates. The preferred monomers are acrylates and methacrylates having a short ($C_1$-$C_4$) alkyl chain and ethylene glycol dimethacrylate and butylene glycol dimethacrylate.

The choice of monomer (a) depends on the rheological characteristics to be obtained and also on the solubility of the rubbers in the monomer.

As mentioned before, the synergic mix of rubbers (c) consists of

(i) one or more rubbers of an ethylenically unsaturated diene-nitrile copolymer associated with

(ii) one or more rubbers of chlorosulphonated polyethylene.

As regards the diene-nitrile rubber, it preferably is a (highly) unsaturated copolymer of one or more linear or cyclic $C_3$-$C_{10}$ dienes copolymerized with less than 50% by weight, referred to the total weight of the copolymer, of one or more unsaturated nitriles.

Preferred unsaturated nitriles are acrylonitrile and methacrylonitrile. Suitable diene-nitrile rubbers are available on the market, for example the butadiene (>50%)-acrylonitrile rubbers of the type "Europrene[(R)]N. 3360" (ENICHEM, Italy).

The chlorosulphonated polymer utilized is a straight-chain or branched chlorosulphonated polyethylene, although chlorosulphonated ethylene copolymers containing minor amounts (e.g. less than 20, preferably less than 10% by weight) of propylene and/or other olefins (e.g. $C_4$-$C_8$ $\alpha$-olefins) can be used.

The chlorosulphonated polyethylene may be prepared, according to conventional techniques, by reacting straight-chain or branched polyethylene with sulphonyl chloride or with sulphur dioxide and chlorine. This polymer is well known in literature and is produced and sold, for example, by Du Pont, USA, under the trademark "Hypalone[(R)]", such as "Hypalon[(R)]20", etc.

In the rubber component (c), (diene-unsaturated nitrile copolymer rubber):(chlorosulphonated polyethylene) weight ratios ranging from about 1:0.5 to about 1:4, preferably from about 1:1 to about 1:2, are usually employed.

The weight ratios of the components of the compositions can vary over a wide range, the preferred values being the following:

- the free radical generator (b) is present in an amount of from 0.1 to 5% by weight referred to the total composition, optionally combined with an activator in an (activator):(free radical generator) weight ratio ranging from 1:1 to 10:1;

3

- the acrylic monomer component (a) amounts to about 60 to 85% by weight, calculated on the total composition, preferably to about 60 to 70% by weight;
- the rubber component (c) amounts to about 10 to 35% by weight, calculated on the total composition, preferably to 20 to 30% by weight, the sum of components (a) + (b) + (c) being equal to 100%.

The adhesive compositions according to the present invention can be prepared by means of methods which are known for this type of compositions and are based on mixing and other operations, optionally in the presence of inhibitors.

Suitable inhibitors are the quinones and hydroquinones, for example hydroquinone, hydroquinone monomethylether, anthraquinone, 2,6-di-tert-butyl para-methylphenol (BHT), etc., usually in amounts ranging from 0.1 to 2 parts by weight per 100 parts by weight of the composition. 2,6-Di-tert-butyl-para-methylphenol (BHT) is the preferred stabilizing agent (inhibitor).

Advantageously, the adhesive compositions of the present invention are formulated in the form of two-component systems, wherein the first component is composed of the solution of the synergic mixture of rubbers (c) in the acrylic monomer component (a) and the free radical generator (b), while the second component is composed of the activator.

Alternatively, a so-called premix or pre-mixture may be prepared, wherein the activator is mixed with the acrylic component (a) before being used.

The present compositions may also be utilized according to the "primer" technique, which comprises the application of the adhesive component onto an adherend and the application of the activating component onto the other adherend.

Furthermore, said compositions are utilizable not only at room temperature but also at higher temperatures, both during setting and during operation.

The adhesive compositions of the present invention can be utilized on porous and smooth surfaces without necessarily requiring any pretreatment of the surfaces onto which they are to be applied.

Examples of materials which can be glued by means of the acrylic adhesives of the present invention are steel, aluminium, copper, titanium, brass, polar polymeric materials, wood, glass, paper, pre-painted surfaces, etc.

The setting times generally range from about 0.5 to 2 minutes and usually they are of the order of 1 minute. The shelf life of the adhesive compositions under standard conditions is about six months.

The adhesive compositions of the present invention offer several advantages, the most important ones of which are:

(a) high resistance to fracture and, simultaneously, high adhesion of the binder to the substrate;

(b) short setting times, measured as the time after which it is not possible to separate two glued test pieces by means of a manually applied shear stress;

(c) long shelf life, measured as the period of time over which no gelling phenomena occur when the samples are maintained at room temperature.

To facilitate the understanding of the present invention some illustrative, but not limitative examples are given hereinafter.

The following abbreviations will be used:

- EMA = ethyl methacrylate monomer;
- MA = methacrylic acid;
- EGDMA = ethylene glycol dimethacrylate;
- CHP = cumene hydroperoxide;
- PEC = chlorosulphonated polyethylene (Hypalon[R]20, Du Pont de Nemours, USA);
- ABN = acrylonitrile-butadiene copolymer (Europrene[R] N. 3360, Enichem, Italy);
- BHT = 2,6-di-tert-butyl-p-cresol;
- MMA = methyl methacrylate;
- BMA = butyl methacrylate;
- CEMA = cyclohexyl methacrylate;
- EVA = ethylene-vinyl acetate (Elwax[R]40 W-Du Pont, USA);
- SBR = styrene-butadiene rubber (Enichem, Italy);
- CTBN = Hycar 1472[R] (Goodrich B.F.), a carboxy-terminated butadiene-acrylonitrile rubber;
- DHP = N-phenyl-3,5-diethyl-2-propyl-1,2-dihydropyridine;
- PTFE = polytetrafluoroethylene.

EXAMPLE 1

Preparation of the adhesive paste

To a mixture of acrylic monomers consisting of 58 g of MMA, 10 g of methacrylic acid and 1 g of ethylene glycol dimethacrylate (EGDMA), two rubbers were added, i.e., 20 g of PEC and 10 g of ABN, whereafter 0.3 g of BHT (which acts as inhibitor) were added.

The formulation was then mixed by stirring it for 48 hours in a glass reactor.

Once the two rubbers had completely dissolved, 0.7 g of CHP were added.

EXAMPLES 2 to 4

By operating according to example 1, other compositions were prepared in which MMA was substituted by other acrylic monomers, as indicated in Table I.

TABLE I

| EXAMPLE | ACRYLIC MONOMER |
|---------|-----------------|
| 2 | EMA |
| 3 | BMA |
| 4 | CEMA |

EXAMPLE 5 (comparative example

By operating according to example 1, a formulation having the same composition as in example 2 was prepared, with the exception that as second rubber CTBN was utilized, as indicated in the following Table II.

TABLE II

| EXAMPLE | ACRYLIC MONOMER (%) | ELASTOMER (%) |
|---------|---------------------|---------------|
| 5 | EMA (58) | PEC (20) CTBN (10) |

EXAMPLE 6 (Applicative example)

In order to evaluate the performance of the adhesives prepared in examples 1 to 4 and 5 (comparative), test pieces were utilized for the lap shear test according to ASTM D-1002-72. The test pieces were prepared by spreading the paste onto one side of the joint and the activator (DHP) onto the other side. The test pieces were made of steel (FEPO4) and degreased in trichloroethylene and pickled in a sulphochromic mixture. The test pieces were prepared by glueing a 12x25 mm surface, maintaining the glued part under a press for about 1 minute at about 3 kg/cm$^2$. The joints were then subjected to a lap shear test, after a 24 hour curing at room temperature plus 1 hour at 100°C, by means of a dynamometer (INSTRON MTSM-810), at a speed of 1 mm/minute. The results of the above tests are reported in Table III.

TABLE III

| ADHESIVE OF EXAMPLE | LAP SHEAR TEST (N/mm$^2$) |
|---------------------|---------------------------|
| 1 | 21.0 |
| 2 | 14.1 |
| 3 | 16.0 |
| 4 | 24.1 |
| 5 (comparative) | 10.0 |

The above results show the higher toughness obtained by using the adhesives of the invention, which is nearly twice as high as that of the comparative material.

EXAMPLE 7

To evaluate the tensile impact strength of the adhesives prepared in examples 1 to 3 and in comparative example 5, test pieces were prepared by mixing the acrylic paste, containing the cumene hydroperoxide and the activator (DHP) in a weight ratio of 1:20, in PTFE molds for 24 hours at room temperature plus 1 hour of post-curing at 100°C in order to obtain a complete polymerization. On the test pieces withdrawn from the molds, having dimensions of 70x15x2 mm, two opposed notches having a depth of 3.7 mm and a width of 0.6 mm were made. The tests were carried out using a Zwick pendulum Mod. 5101, operating at a speed of 0.68 m/sec. The results of the impact tests are reported in Table IV.

TABLE IV

| ADHESIVE OF EXAMPLE | TENSILE IMPACT TEST (J/cm$^2$) |
|---|---|
| 1 | 5.1 |
| 2 | 4.5 |
| 3 | 4.4 |
| 5 (comparative) | 1.67 |

EXAMPLES 8 to 13 (comparative)

As comparison, Table V below shows the results obtained in the same tensile impact test as in example 7, using acrylic adhesives prepared as in example 1, starting from the monomers and from the individual rubbers shown in Table V, in amounts equal to those utilized for examples 1 to 3, or in the largest possible amounts in relation to the solubility of the rubbers in the monomers. Therefore, the comparative formulations qualitatively had the same composition and were prepared according to the same procedure as utilized for the formulations containing rubber mixtures according to the invention.

TABLE V

| EXAMPLE | MONOMER (%) | RUBBER (%) | TENSILE IMPACT TEST (J/cm$^2$) |
|---|---|---|---|
| 8 | MMA (58.5) | PEC (30) | 2.2 |
| 9 | EMA (58.5) | PEC (30) | 2.2 |
| 10 | BMA (58.5) | PEC (30) | 1.8 |
| 11 | MMA (68.5) | ABN (20) | 3.3 |
| 12 | EMA (68.5) | ABN (20) | 3.0 |
| 13 | BMA (68.5) | ABN (20) | 2.5 |

The better crack resistance results obtained with the adhesives of the invention are evident.

**Claims**

1. Acrylic adhesive compositions comprising:
   (a) at least one polymerizable acrylic monomer;
   (b) a free radical generator, and
   (c) a rubber mix of
      (i) diene-nitrile rubber and
      (ii) chlorosulphonated polyethylene.

2. Compositions according to claim 1, wherein the acrylic monomer or monomers (a) are selected from C$_1$-C$_4$ alkyl acrylates and methacrylates, ethylene glycol dimethacrylate, butylene glycol dimethacrylate and mixtures thereof.

6

3. Compositions according to any one of claims 1 and 2, wherein the free radical generator (b) is selected from organic hydroperoxides, peresters, peracids, oxaziridines and mixtures thereof, particularly from cumene hydroperoxide and oxaziridines.

4. Compositions according to any one of the preceding claims, wherein the free radical generator (b) is associated with an activator, particularly an aldehyde/amine condensation mixture.

5. Compositions according to any one of the preceding claims, wherein the rubber mix (c) comprises a copolymer of one or more linear or cyclic $C_3$-$C_{10}$ dienes and less than 50% by weight, referred to the total weight of the copolymer, of one or more unsaturated nitriles, said nitriles being preferably selected from acrylonitrile, methacrylonitrile and mixtures thereof.

6. Compositions according to any one of claims 1 to 5, wherein the rubber mix (c) comprises a butadiene-acrylonitrile copolymer having more than 50% by weight, referred to the total weight of the copolymer, of diene component.

7. Compositions according to any one of the preceding claims, wherein the chlorosulphonated polyethylene (ii) is straight-chained or branched and optionally contains minor amounts of other olefin(s).

8. Compositions according to any one of claims 1 to 7, wherein, in the rubber mix (c), the weight ratio of diene-nitrile copolymer (i) to chlorosulphonated polyethylene (ii) ranges from 1:0.5 to 1:4, particularly from 1:1 to 1:2.

9. Compositions according to any one the preceding claims, wherein the free radical generator (b) is utilized in an amount of from 0.1 to 5% by weight, referred to the total weight of the composition.

10. Compositions according to any one of claims 4 to 9, wherein the weight ratio of activator to free radical generator ranges from 1:1 to 10:1.

11. Compositions according to any one of the preceding claims, wherein the acrylic monomer component (a) is present in amounts of from 60 to 85%, particularly 60 to 70% by weight, calculated on the total weight of the composition.

12. Compositions according to any one of the preceding claims, wherein the rubber mix (c) is present in amounts of from 10 to 35%, particularly 20 to 30% by weight, calculated on the total weight of the composition.

13. Compositions according to any one of the preceding claims, additionally containing an inhibitor, said inhibitor being preferably selected from hydroquinone, hydroquinone monomethyl ether, anthraquinone, 2,6-di-tert-butyl paramethylphenol (BHT) and being preferably present in amounts ranging from 0.1 to 2 parts by weight per 100 parts by weight of the composition.